(19) **Europäisches Patentamt**
**European Patent Office**
**Office européen des brevets**

(11) **EP 3 838 662 B1**

(12) **EUROPEAN PATENT SPECIFICATION**

(45) Date of publication and mention
of the grant of the patent:
**02.08.2023   Bulletin 2023/31**

(21) Application number: **20210951.8**

(22) Date of filing: **01.12.2020**

(51) International Patent Classification (IPC):
**B60N 2/70** *(2006.01)*   **B60N 2/42** *(2006.01)*
**B60N 2/427** *(2006.01)*   **B60N 2/64** *(2006.01)*
**B60N 2/68** *(2006.01)*

(52) Cooperative Patent Classification (CPC):
**B60N 2/4221; B60N 2/4263; B60N 2/42718;**
**B60N 2/686**

(54) **PLASTICS CUSHION PAN**

SITZKISSEN

ASSISE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **17.12.2019   TR 201920537**

(43) Date of publication of application:
**23.06.2021   Bulletin 2021/25**

(73) Proprietor: **Magna Otomotiv Sanayi Ve Ticaret A.S.**
**41680 Gölcük Kocaeli (TR)**

(72) Inventors:
• **BAYIR, Bilal**
**41470 Gebze/Kocaeli (TR)**

• **KADAS, Serkan**
**41310 Alikahya Kocaeli (TR)**
• **ALTUNSOY, Remzi**
**41680 Kocaeli Gölcük (TR)**

(74) Representative: **Reuter, Silke Beatrix**
**Magna International (Germany) GmbH**
**Kurfürst-Eppstein-Ring 11**
**63877 Sailauf (DE)**

(56) References cited:
**EP-A1- 2 949 503      DE-A1-102008 061 973**
**US-A1- 2019 176 668   US-B2- 6 851 747**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field:**

The invention relates to a plastic cushion pan with a groove structure which provides the required resistance criteria in seat systems by providing support on 3 sides.

**State of the Art:**

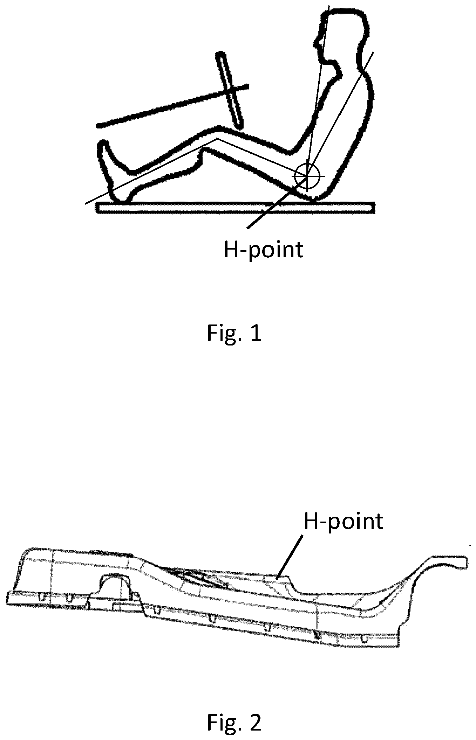

In the seat design, a H-point is determined based on customer requests and international regulations, and the position of this point relative to a 0 (zero) reference point in space for each seat in the vehicle seats is fixed. The measurement of this point is based on the position of the dummy shown in Figure 1 in the sitting position. In the seat pan designs, this point should be provided and protected according to regulations.

In the accidents which occur as a result of collisions of vehicles, a force is formed on the seat pan of the seat where the user/passenger is seated which is in proportion to the direction of the collision. In the researches on the accidents caused by the collisions of the vehicles, it was observed that as a result of the majority of the collisions, the user puts pressure on an area formed on the seat pan of the seat where the user is seated, at an angle of 18 degrees to his/her left and right.

The collision with a G acceleration determined in the international regulations and customer requests, depending on the sitting position of the passenger on the seat, is directed towards the out of the vehicle (+ 18°), in the direction of the vehicle (0°) and into the vehicle (-18°). according to the principle of inertia.

In case of a collision with a G acceleration determined in international regulations and customer requests, H-point centric inertial forces based on the principle of inertia are formed.

It is observed in the state of the art that the metal seat pans with features which are capable of withstanding said force are supported on three points are plastic seat pans are supported on four points.

Metal seat pans are used in the front row double seats used in the state of the art. Said metal seat pans are supported on three sides. In the seat systems where plastic seat pans are used, said seat pans are supported on 4 sides in order to provide the required resistance and safety. Because if the plastic seat pans are supported on 3 sides, required resistance conditions are not met.

The EP 2 949 503 A1 reveals a plastic cushion pan with a groove structure which provides the required criteria in seat systems by providing support on 3 sides.

**Object of the Invention:**

The present invention of the disclosure aims to form an improved groove structure which will allow supporting plastic cushion pan on 3 sides.

**Description of the Drawings:**

The figures of the plastic cushion pan of the invention are provided below.

> **Figure 1.** View of the H-point forming according to the driving position of the user in the vehicle.
> **Figure 2.** Side view of the plastic cushion pan

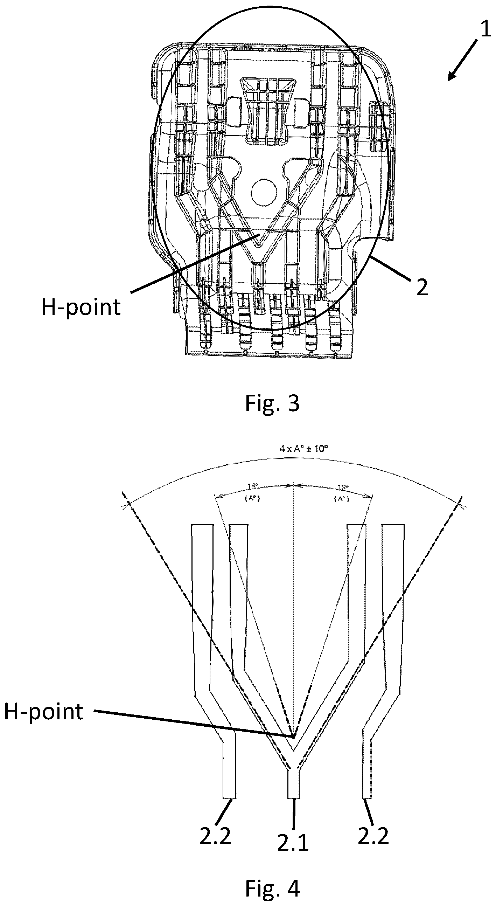

> **Figure 3**. Front view of the plastic cushion pan
> **Figure 4.** View of the groove structure on the plastic cushion pan

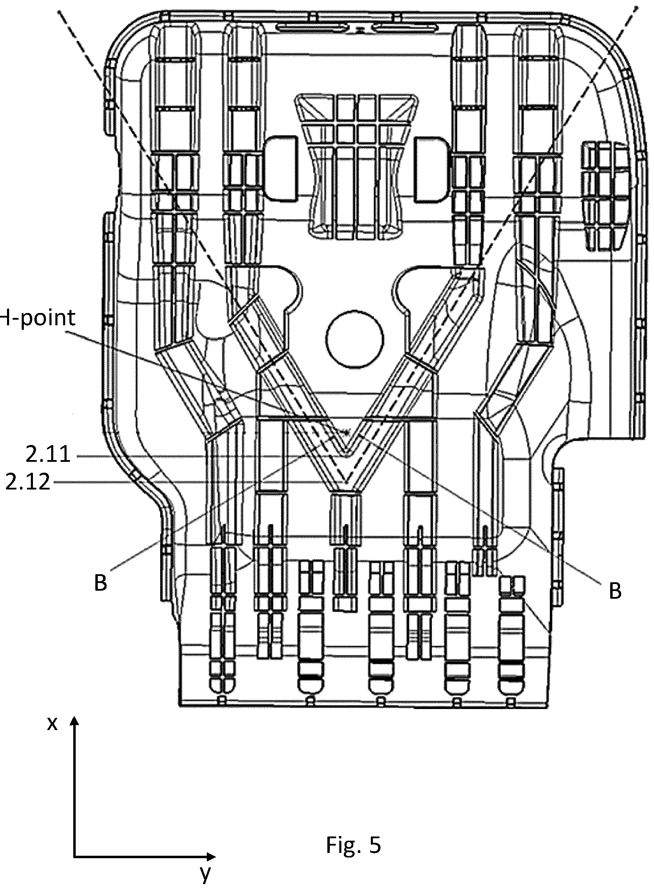

> **Figure 5**. Front view of the plastic cushion pan

**Description of the References in the Drawings:**

The corresponding elements of the reference numbers in the drawings are provided below.

> **1.** Plastic cushion pan
> **2.** Groove structure

>> **2.1.** First groove

>>> **2.11.** First groove center
>>> **2.12.** Junction of the first groove axis lines

**2.2.** Second groove

**A.** Angle of the passenger direction during collision
**B.** Groove width

**Description of the Invention:**

The invention relates to a plastic cushion pan (1) with a groove structure which provides the required resistance criteria in seat systems by providing support on 3 sides, comprising a groove structure (2) with

- a first groove (2.1) which prevents the plastic cushion pan (1) from breaking by ensuring that the load distribution which occurs against the passenger movement during collision spreads across the plastic cushion pan (1) and has a double groove which extends in a "V" form from the point H-point onwards, the position of which on the plastic cushion pan (1) is determined depending on customer requests and international regulations and which is taken as the center, to the right of this point at an angle of "4 x A° ± 10" and to the left of this point at an angle of "4 x A° ± 10" and proceeds in parallel to each other, and a single groove extending backwards from this point by taking the H-point as the center and

- a second groove (2.2) on the right and left of the V-formed first channel (2.1) and extending parallel to the first channel (2.1).

The location of the first groove (2.1) on the plastic cushion pan (1) is determined relative to the H-point. The location of the junction of the first groove axis lines (2.12) on the "x" axis relative to the H-point is between ± 5 mm of double the distance between the first groove center (2.11) and the H-point.

The location of the junction of the first groove axis lines (2.12) on the "x" axis relative to the H-point = 2 x (distance between first groove center (2.11) and the H-point) ± 5 mm

| The location of the junction of the first groove axis lines (2.12) on the "x" axis relative to the H-point | = 2 x | Distance between the first groove center (2.11) and the H-point | ± 5 mm |
|---|---|---|---|

The groove width (B) of the grooves extending in said V-form of the first groove (2.1) with the double groove structure extending in a "V" form and then proceeding in parallel to each other is between ± 7 mm of the distance between the first groove center (2.11) and the H-point.

| Groove width (B) = ± | Distance between the first groove center (2.11) and the H- | 7 mm |
|---|---|---|

In the accidents which occur as a result of collisions of vehicles, a force is formed on the cushion pan of the seat where the user is seated which is in proportion to the direction of the collision. In the researches on the accidents caused by the collisions of the vehicles, it was observed that as a result of the majority of the collisions, the user puts pressure on an area formed on the cushion pan of the seat where the user is seated, at an angle of 18 degrees to his/her left and right.

The invention takes the angle of the passenger direction during collision (A) as 18°. The angle of the passenger direction during collision (A) may be smaller or greater. If said angle is selected as a greater one, the angle of the groove structure (2) forming the invention will change.

The groove structure (2) of the invention prevents the part from breaking by ensuring that the load distribution which occurs against the passenger movement during collision spreads across the plastic cushion pan (1) at an angle of +18, -18 and 0° and prevents a break that will cause injury.

In case of a collision with a G acceleration, H-point centric inertial forces based on the principle of inertia are formed. The collision with a G acceleration, depending on the sitting position of the passenger on the seat, is directed towards the out of the vehicle (+ 18°), in the direction of the vehicle (0°) and into the vehicle (-18°). according to the principle of inertia.

The invention is a groove structure (2) having a special "V" arrangement and a "U" cross-section added on the plastic cushion pan (1). Thanks to said groove structure on the plastic cushion pan (1), support is provided on three sides instead of 4 sides and as a result, required resistance is provided in the angular/non-angular collision tests.

While support on 4 sides is required in order to provide the required resistance in the plastic cushion pans in the state of the art, the invention allows providing support on 3 sides thanks to the "V" arrangement and "U" cross-section it has and provides the required resistance with these features.

During the damping of the movement of the passenger out of the vehicle (+ 18°), in the direction of the vehicle (0°) and into the vehicle (-18°) as a result of inertia, the passenger is stopped mechanically between the plastic cushion pan (1) and the seat belt, and all the forces are damped by the seat belt and plastic cushion pan (1).

Meanwhile the inertial forces which are H-point centric, in parallel with the road depending on the passenger position, and at an angle of + 18°, 0°, 18° and in the direction of acceleration are transferred to the plastic cushion pan (1) thanks to its anti-submarine structure. Against all of these forces, the plastic cushion pan (1) should remain unbroken and be able to safely hold the passenger on the seat.

The invention provides the passenger from sliding off the seat during the collision and getting injured as a result with its anti-submarining feature and angular slope formed geometrically plastic cushion pan (1).

With the V arrangement groove structure (2) of the present invention, the forces on the plastic cushion pan (1) are distributed laterally and linearly on the part in case of collisions in different passenger positions. Thus, local stress concentrations which occur on the part are minimized and the part show resistance.

The first groove (2.1) and second groove (2.2) cross-sections forming the V-formed groove structure are designed as U-formed profiles with high mass moments of inertia allowing lateral and linear loads to be transferred. The number of lateral grooves can be increased depending on the size of the part. In case of linear direction, the groove lengths can be increased. The important point here is the position of the junction of the V-formed groove arrangement relative to the H-point.

Additionally, part resilience is controlled ergonomically with said groove structure and necessary comfort can be achieved even though it is a plastic cushion pan (1).

## Implementation of the Invention in the Industry:

The invention is used in the vehicle seat systems.

## Claims

1. A plastic cushion pan (1) with a groove structure which provides the required resistance criteria in seat systems by providing support on 3 sides, comprises a groove structure (2) with a first groove (2.1) which prevents the plastic cushion pan (1) from breaking by ensuring that the load distribution which occurs against the passenger movement during collision spreads across the plastic cushion pan (1)
**characterized in,**

   - **that** the first groove (2.1) has a double groove which extends in a "V" form from the point H-point onwards, the position of which on the plastic cushion pan (1) is determined depending on customer requests and international regulations and which is taken as the center, to the right of this point at an angle of "4 x A° $\pm$ 10" and to the left of this point at an angle of "4 x A° $\pm$ 10" and proceeds in parallel to each other, and a single groove extending backwards from this point by taking the H-point as the center and
   - **that** the groove structure comprises at least a second groove (2.2) on the right and left of the V-formed first channel (2.1) and extending parallel to the first channel (2.1).

2. The groove structure (2) of claim 1, wherein the first groove (2.1) and second groove (2.2) cross-sections forming the V-formed groove structure (2) are U-formed with high mass moments of inertia allowing lateral and linear loads to be transferred.

3. The groove structure (2) of claim 1 or claim 2, wherein the number of the second groove (2.2) around the first groove (2.1) is in accordance with the transverse distance/capacity of the plastic cushion pan (1).

4. The groove structure (2) of claim 1 or claim 2 or claim 3, wherein the groove lengths of the first groove (2.1) and the second groove (2.2) extends along the linear surface of the plastic cushion pan (1).

5. The groove structure (2) of claim 1 or claim 2 or claim 3 or claim 4, wherein the location of the junction of the first groove axis lines (2.12) on the "x" axis relative to the H-point is between $\pm$ 5 mm of double the distance between the first groove center (2.11) and the H-point.

6. The groove structure (2) of claim 1 or claim 2 or claim 3 or claim 4 or claim 5, wherein the groove width (B) of the grooves extending in said V-form of the first groove (2.1) with the double groove structure extending in a "V" form and then proceeding in parallel to each other is between $\pm$ 7 mm of the distance between the first groove center (2.11) and the H-point.

**Patentansprüche**

1. Sitzkissen (1) mit einer Rillenstruktur, die die erforderlichen Widerstandskriterien in Sitzsystemen durch eine dreiseitige Abstützung bereitstellt, umfasst eine Rillenstruktur (2) mit einer ersten Rille (2.1), die ein Brechen des Sitzkissens (1) verhindert, indem sie dafür sorgt, dass sich die Lastverteilung, die bei einer Kollision gegen die Bewegung des Fahrgastes auftritt, über das Sitzkissen (1) verteilt **dadurch gekennzeichnet,**

   - **dass** die erste Rille (2.1) eine doppelte Rille aufweist, die sich vom H-Punkt aus, dessen Position auf dem Sitzkissen (1) in Abhängigkeit von Kundenanforderungen und internationalen Vorschriften bestimmt wird und der als Zentrum genommen wird, rechts von diesem Punkt in einem Winkel von "4 x A° $\pm$ 10" und links von diesem Punkt in einem Winkel von "4 x A° $\pm$ 10" erstreckt und parallel zueinander verläuft, und eine einzelne Rille, die sich von diesem Punkt aus nach hinten erstreckt, indem der H-Punkt als Zentrum genommen wird und
   - **dass** die Rillenstruktur mindestens eine zweite Rille (2.2) umfasst, die sich rechts und links von der V-förmigen ersten Rinne (2.1) befindet und parallel zur ersten Rinne (2.1) verläuft.

2. Rillenstruktur (2) gemäß Anspruch 1, wobei die Querschnitte der ersten Rille (2.1) und der zweiten Rille (2.2), die die V-förmige Rillenstruktur (2) bilden, U-förmig sind und hohe Massenträgheitsmomente aufweisen, die die Übertragung von seitlichen und linearen Lasten ermöglichen.

3. Rillenstruktur (2) gemäß Anspruch 1 oder Anspruch 2, wobei die Anzahl der zweiten Rille (2.2) um die erste Rille (2.1) herum der Entfernung/Kapazität des Sitzkissens (1) in Querrichtung entspricht.

4. Rillenstruktur (2) gemäß Anspruch 1 oder gemäß Anspruch 2 oder gemäß Anspruch 3, wobei die Rillenlängen der ersten Rille (2.1) und der zweiten Rille (2.2) entlang der linearen Fläche des Sitzkissens (1) verlaufen.

5. Rillenstruktur (2) gemäß Anspruch 1 oder Anspruch 2 oder Anspruch 3 oder Anspruch 4, wobei der Ort der Kreuzung der ersten Rillenachsenlinien (2.12) auf der "X"-Achse relativ zum H-Punkt zwischen $\pm$ 5 mm der doppelten Entfernung zwischen dem ersten Rillenmittelpunkt (2.11) und dem H-Punkt liegt.

6. Rillenstruktur (2) gemäß Anspruch 1 oder Anspruch 2 oder Anspruch 3 oder Anspruch 4 oder Anspruch 5, wobei die Rillenbreite (8) der Rillen, die sich in der V-Form der ersten Rille (2.1) mit der doppelten Rillenstruktur in einer "V"-Form erstrecken und dann parallel zueinander verlaufen, zwischen $\pm$ 7 mm der Entfernung zwischen dem ersten Rillenmittelpunkt (2.11) und dem H-Punkt liegt.

**Revendications**

1. Assise en plastique (1) dotée d'une structure de rainures qui fournit les critères de résistance requis dans les systèmes de siège par la fourniture de support sur 3 côtés, comprend une structure de rainures (2) ayant une première rainure (2.1) qui empêche l'assise en plastique (1) de se casser en assurant que la répartition de charge qui se produit à l'encontre du mouvement du passager pendant une collision s'étend sur toute l'assise en plastique (1) **caractérisée en ce que**

   la première rainure (2.1) a une rainure double qui s'étend en forme de « V » depuis le point nommé point H vers l'avant, dont la position sur l'assise en plastique (1) est déterminée en fonction des demandes du client et des règlements internationaux et qui est pris comme centre, vers la droite de ce point à un angle de « 4 x A° ± 10» et vers la gauche de ce point à un angle de « 4 x A° ± 10» puis se poursuit parallèlement, et une rainure unique s'étendant vers l'arrière depuis ce point en prenant le point H comme centre, et

la structure de rainures comprend au moins une seconde rainure (2.2) sur la droite et la gauche du premier canal en forme de V (2.1) et s'étendant parallèlement au premier canal (2.1).

2. Structure de rainures (2) selon la revendication 1, dans laquelle les sections transversales de la première rainure (2.1) et de la seconde rainure (2.2) formant la structure de rainures en forme de V (2) sont en forme de U avec des moments d'inertie à masse élevée permettant le transfert de charges latérales et linéaires.

3. Structure de rainures (2) selon la revendication 1 ou la revendication 2, dans laquelle le nombre de secondes rainures (2.2) autour de la première rainure (2.1) dépend de la distance transversale/capacité de l'assise en plastique (1).

4. Structure de rainures (2) selon la revendication 1 ou la revendication 2 ou la revendication 3, dans laquelle les longueurs de rainure de la première rainure (2.1) et de la seconde rainure (2.2) s'étendent le long de la surface linéaire de l'assise en plastique (1).

5. Structure de rainures (2) selon la revendication 1 ou la revendication 2 ou la revendication 3 ou la revendication 4, dans laquelle la position de la jonction des lignes d'axe de la première rainure (2.12) sur l'axe « x » par rapport au point H est égale à ± 5 mm au double de la distance entre le centre de la première rainure (2.11) et le point H.

6. Structure de rainures (2) selon la revendication 1 ou la revendication 2 ou la revendication 3 ou la revendication 4 ou la revendication 5, dans laquelle la largeur de rainure (B) des rainures s'étendant en ladite forme de V de la première rainure (2.1) avec la structure de double rainure s'étendant en forme de V puis se poursuivant parallèlement est égale à ± 7 mm de la distance entre le centre de la première rainure (2.11) et le point H.

H-point

Fig. 1

H-point

Fig. 2

H-point

1

2

Fig. 3

4 x A° ± 10°

18°
(A°)

18°
(A°)

H-point

2.2    2.1    2.2

Fig. 4

Fig. 5

**REFERENCES CITED IN THE DESCRIPTION**

**Patent documents cited in the description**

- EP 2949503 A1